(19) **Europäisches Patentamt / European Patent Office / Office européen des brevets**

(11) **EP 4 783 485 A1**

(12) # EUROPEAN PATENT APPLICATION

(43) Date of publication:
**29.07.2026 Bulletin 2026/31**

(21) Application number: **26153817.7**

(22) Date of filing: **23.01.2026**

(51) International Patent Classification (IPC):
**H04B 7/185** $^{(2006.01)}$     **H04W 56/00** $^{(2009.01)}$

(52) Cooperative Patent Classification (CPC):
**H04B 7/18528; H04B 7/18513; H04B 7/18578; H04W 56/0015**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **24.01.2025 US 202563749057 P**

(71) Applicant: **Gilat Satellite Networks, Ltd.**
**4913020 Petah-Tikva (IL)**

(72) Inventors:
• **ADOTLER, Adi**
  **49130 Petah Tikva (IL)**
• **BRENER, Snir**
  **49130 Petah Tikva (IL)**

(74) Representative: **V.O.**
**P.O. Box 87930**
**2508 DH Den Haag (NL)**

(54) **SATELLITE COMMUNICATION TERMINAL AND METHODS THEREOF**

(57)     A satellite communication terminal receiving signals associated with a network, may extract timestamps from the signal that may be associated with a network clock. A local clock of the satellite communication terminal may be synchronized with the extracted timestamp and signaling information extracted from the signal. The satellite communication terminal may share information concerning the satellite communication terminal and portions of the signaling linformation with an antenna control unit to assist in communication between the satellite communication terminal and a satellite.

FIG. 3

**Description**

CROSS-REFERENCE TO RELATED APPLICATIONS

This application claims the benefit of U.S. Provisional Application No. 63/749,057 filed on January 24, 2025. The above-referenced application is hereby incorporated by reference in its entirety.

FIELD OF ART / TECHNICAL FIELD

Aspects of the disclosure pertain to the field of satellite communication terminals.

BACKGROUND

A terminal for satellite communication often comprises an antenna configured for receiving and (in most cases also) transmitting in a predefined frequency band (e.g., C-band, X-band, Ku-band, or Ka-band), from and to a satellite, respectively. The terminal often also comprises a modem configured to demodulate transmissions received via the antenna, to extract data carried in those transmissions, and to send data (e.g., over a satellite) by modulating it on a carrier transmitted via the antenna. For the terminal to communicate via a satellite, the antenna must have its receive beam (and its transmit beam, if different from the receive beam) pointed at the location of the satellite (i.e., in space).

For applications where there may be significant relative movement between the satellite and the terminal (e.g., due to the terminal being installed on a vehicle, a maritime vessel of an aircraft, or due to the satellite orbiting the Earth in a non-geostationary orbit (NGSO), or both) to maintain communication via the satellite, the antenna has to continuously change its azimuth and/or elevation look angles in order to keep its beam(s) pointed at the satellite. Such beam steering (i.e., changes in azimuth and/or elevation angle) can be performed either mechanically (e.g., by employing motors for rotating the antenna in azimuth and elevation), electronically (e.g., by manipulating gain and phase between multiple receiving or transmitting elements), or using a combination of both.

Electronically Steerable Antennas (ESA) have a significant advantage over mechanically steered antennas if there is a need to steer the antenna beam(s) towards another satellite, especially if the other satellite is tens of degrees away (e.g., in either azimuth, elevation, or both). While a mechanically steerable antenna may take up to several tens of seconds to repoint its beam(s) at the other satellite (and initial pointing might not be optimal), ESAs are usually capable of performing such repointing almost instantaneously (e.g., within few tens to few hundreds of milliseconds). Consequently, to achieve practically continuous communication, a terminal comprising an ESA may do with a single antenna, whereas a terminal comprising a mechanically steerable antenna may require at least two such antennas. With ESAs becoming less expensive on one hand, and mechanically steerable antennas being relatively expensive on the other hand, a terminal comprising a single ESA may be more cost-effective than a terminal comprising two mechanically steerable antennas.

However, ESAs also have a disadvantage - power consumption. To achieve sufficient gain and to have sufficient granularity in beam pointing, an ESA must comprise hundreds to thousands of active elements. These elements, in addition to consuming significant amounts of electrical power (e.g., especially those elements associated with transmitting), also generate a considerable amount of heat, which must be dissipated to prevent damage to the ESA. Consequently, manufacturers seek ways to reduce the power consumption of their ESAs (and with it also the heat generation). One method for reducing power consumption is to operate the antenna in half-duplex, (e.g., the receiving elements are powered on while the transmitting elements are powered off, and the transmitting elements are powered on while the receiving elements are powered off). While using such half-duplex method may indeed reduce power consumption, it may also reduce the performance of the entire terminal, which cannot simultaneously receive data and transmit data using this method. Another method for reducing power consumption is (to possibly power on the receiving elements at all times and) to power off the transmitting elements if the terminal does not transmit data (e.g., for a predefined time duration). However, this method may degrade the terminal performance (e.g., cause higher latency or data loss when transmission is resumed) and affect the ability to monitor the terminal (e.g., since it might not send status information while conserving power). Such degradation may be avoided by transmitting a "keep alive" transmission every few seconds, but then the transmitting elements of the antenna must be powered on longer (i.e., power reduction is reduced, perhaps even to an insignificant level).

BRIEF SUMMARY

The following presents a simplified summary in order to provide a basic understanding of some aspects of the disclosure. The summary is not an extensive overview of the disclosure. It is neither intended to identify key or critical elements of the disclosure nor to delineate the scope of the disclosure. The following summary merely presents some aspects of the disclosure in a simplified form as a prelude to the description below.

Aspects of the disclosure may be directed to a satellite communication terminal. The satellite communication terminal may comprise a modem, an antenna configured for satellite communication, and an antenna control unit (ACU) that may be configured to control the antenna. The modem and the ACU may be interconnected using at least a communication channel. The modem may be configured to receive a forward channel signal, extract from the forward channel signal timestamps corresponding to a network clock, and to generate, based on the timestamps, a modem local clock. The modem local clock may be locked on the network clock. The ACU may be configured to generate an ACU local clock that may be locked on the modem local clock. The locking of the ACU local clock on the modem local clock may comprise using a clock synchronization protocol over the communication channel.

A modem and an ACU may be configured to share, in addition to a communication channel, a synchronization signal. The modem and the ACU may be configured to share, in addition to the communication channel and the synchronization signal, a reference clock, wherein the element generating the reference clock (e.g., either the ACU, the modem, or an independent clock source) may also generate the synchronization signal. The modem may be configured to receive a forward channel signal, extract from the forward channel signal timestamps corresponding to a network clock, and to generate, based on the timestamps, a modem local clock. The modem local clock may be locked on the network clock. The modem may be configured to determine a first value of the modem local clock corresponding to a first pulse associated with the synchronization signal, determine a second modem local clock value corresponding to a second pulse associated with the synchronization signal, produce an expected value of the modem local clock corresponding to a next pulse associated with the synchronization signal, and send the expected value of the modem local clock, over the communication channel, to the ACU. The ACU may be configured to generate, based on the expected values of the modem local clock and using the synchronization signal, an ACU local clock that may be locked on the modem local clock.

A method may comprise receiving, at an ACU and from a modem, signaling information corresponding to a network clock and timing information corresponding to a round-trip delay (RTD), associated with at least the terminal and with a satellite. The signaling information may correspond to one or more return channel resource allocations and/or to one or more forward channel reception windows. The method may further comprise determining, at the ACU and based on the signaling information and/or the timing information, one or more scheduling records. The scheduling record may comprise a configuration start time and a configuration stop time, and the configuration start time and/or the configuration stop time may correspond to an ACU local clock. The method may comprise sending, from the ACU, control signals to the antenna at about a configuration start time associated with a scheduling record to cause activation of one or more elements associated with a transmit beam and/or to cause activation of one or more elements associated with a receive beam (e.g., in accordance with the signaling information). The method may further comprise sending, from the ACU, control signals to the antenna at about a configuration stop time associated with the scheduling record to cause deactivation of one or more elements associated with the transmit beam or deactivation of one or more elements associated with the receive beam (e.g., in accordance with the signaling information).

Aspects of the disclosure may be directed to a method comprising receiving, at a modem and over a forward channel, signaling information corresponding to a network clock. The signaling information may correspond to one or more return channel resource allocations and/or to one or more forward channel reception windows. The method may comprise determining, at the modem, a round-trip delay (RTD) associated with at least the terminal and with a satellite, generating, at the modem and based on the signaling information and on the RTD, transmission notifications and/or reception notifications corresponding to the signaling information and sending the transmission notifications and/or the reception notifications to the ACU.

BRIEF DESCRIPTION OF THE DRAWINGS

Having thus described the disclosure in general terms, reference will now be made to the accompanying drawings, which are not necessarily drawn to scale, and wherein:

Fig. 1 shows an example flow chart of a terminal sending a periodic notification.
Fig. 2 shows an example timing diagram that may correspond to a terminal.
Fig. 3 shows an example block diagram of a satellite communication terminal.
Fig. 4 shows an example flow chart of a terminal performing two processes about simultaneously.
Fig. 5 shows an example timing diagram that may correspond to a terminal.

DETAILED DESCRIPTION

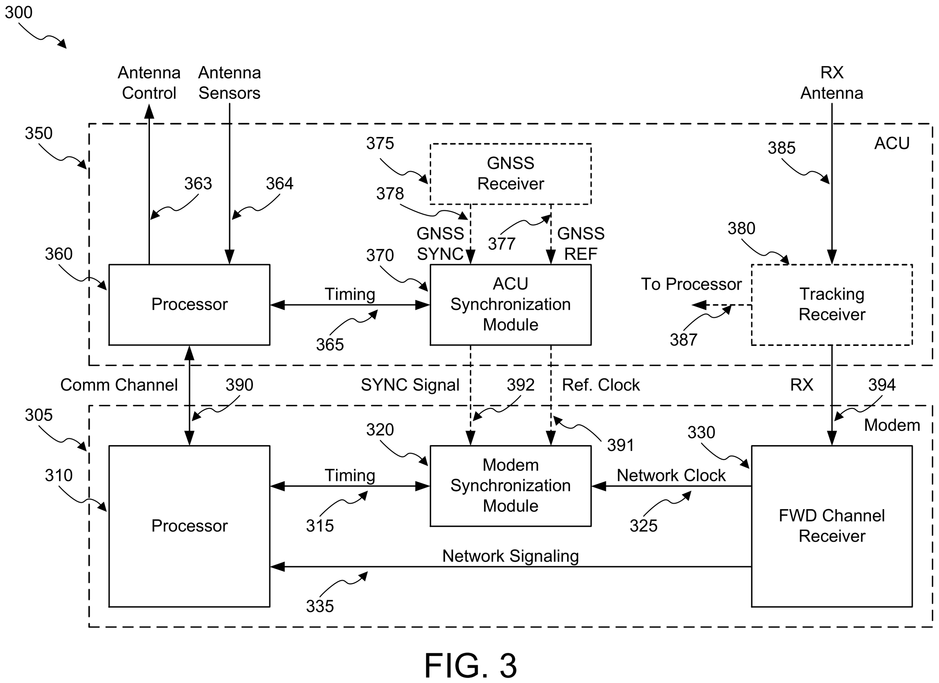

A satellite communication network (system) may comprise at least one satellite, a gateway earth station, and at least one terminal. Fig. 3 shows an example block diagram of a satellite communication terminal 300. The at least one terminal may correspond to satellite communication terminal 300. Satellite communication terminal 300 may comprise a modem 305, an antenna configured for satellite communication (not shown), and an antenna control unit (ACU) 350. The at least one gateway may be configured to transmit a forward channel signal via the at least one satellite to the terminal 300. The at least one gateway may be configured to generate a network clock associated with the satellite communication network, and to send timestamps corresponding to the network clock over the forward channel signal. The gateway may be configured to manage a return channel, allocate return channel resources (e.g., in the frequency domain and/or in the time domain), and send return channel resources allocation information, comprising one or more time identifiers corresponding to the network clock, over the forward channel signal to the terminal 300. The terminal 300 may be configured to receive the forward channel signal, extract the network clock timestamps and the channel resources allocation information, and to transmit a return channel signal via the at least one satellite to the gateway in accordance with the return channel resources allocation information. The gateway may be configured to manage the forward channel, for example to send, over the forward channel signal (e.g., in-band), forward channel activity information comprising one or more identifiers corresponding to the network clock. The terminal 300 may be configured to receive the forward channel signal, extract the forward channel activity information, and to receive the forward channel signal in accordance with the forward channel activity information.

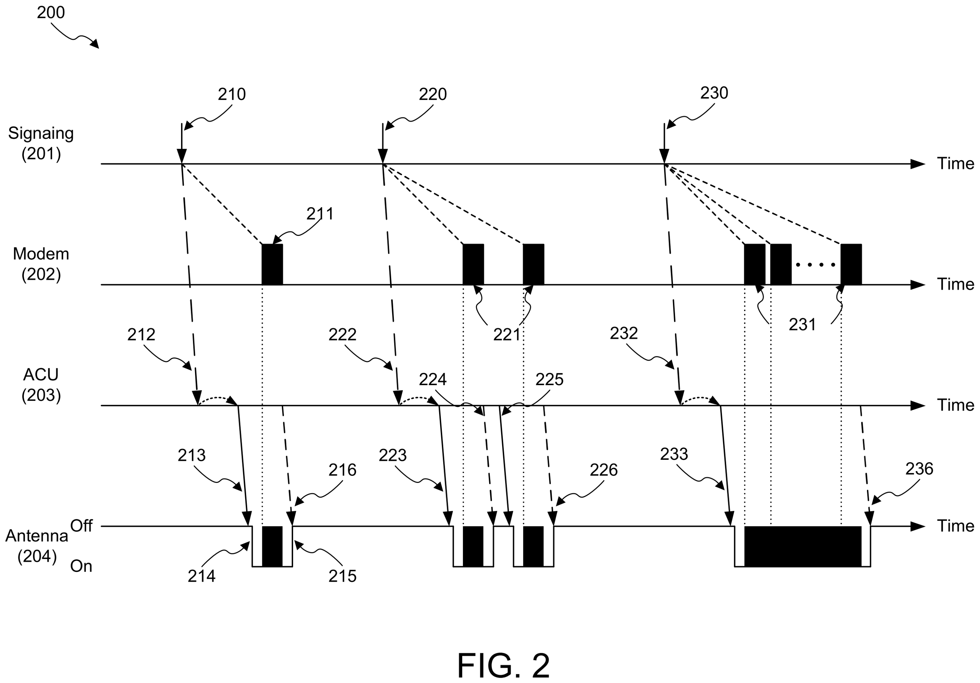

Fig. 2 shows an example timing diagram that may correspond to a terminal. Specifically, Fig. 2 shows an example timing diagram 200 that may correspond to terminal 300. The timing diagram 200 may include a signaling timeline 201, a modem timeline 202, an ACU timeline 203, and/or an antenna timeline 204. The signaling timeline 201 may correspond to the network signaling 335 (e.g., as described herein), the modem timeline 202 may correspond to the modem 305, the ACU timeline 203 may correspond to the ACU 350 and/or to a processor 360 that may be included in the ACU 350, and the antenna timeline 204 may correspond to the antenna of the terminal 300 or to a transmit beam associated with the antenna.

A modem may receive (e.g., in the forward channel signal) an activity record 210. The activity record 210 may comprise information corresponding to a transmission window 211 that may begin after receiving the activity record 210. Responsive to receiving the activity record 210, the modem may send 212 to the ACU any of the activity record 210 or a transmission notification (e.g., as described herein) corresponding to the activity record 210. The ACU may receive 212 the activity record 210 or the corresponding transmission notification. The ACU may determine, based on the activity record 210 or the corresponding transmission notification, a configuration start time. The configuration start time may precede the start time associated with the transmission window 211, and the ACU may send control signals 213 to the antenna at about the configuration start time. The antenna, after or in response to receiving the control signals 213, may activate 214 one or more elements associated with a transmit beam corresponding to the activity record 210. Consequently, the antenna may be ready for transmitting at the time the transmission window 211 begins. The ACU may further determine, based on the received 212 activity record 210 or the corresponding transmission notification, a configuration stop time. The configuration stop time may be later than an end time associated with the transmission window 211, and the ACU may send control signals 216 to the antenna at about the configuration stop time. The antenna, after or in response to receiving the control signals 216, may deactivate 215 one or more elements associated with a transmit beam corresponding to the activity record 210.

A modem may receive (e.g., in the forward channel signal) activity records 220. The activity records 220 may comprise information corresponding to two transmission windows 221, the first transmission window of the two transmission windows 221 may begin after receiving the activity records 220, and the second transmission window of the two transmission windows 221 may begin sometime after the first transmission window of the two transmission windows 221 may end. Responsive to receiving the activity records 220, the modem may send 222 to the ACU any of the activity records 220 or transmission notifications corresponding to the activity records 220. The ACU may receive 222 the activity records 220 or the corresponding transmission notifications. The ACU may determine, based on the activity records 220 or the corresponding transmission notifications, and corresponding to each of the due transmission windows 221, a configuration start time and a configuration stop time. According to the second example, the configuration start time for the second transmission window of the two transmission windows 221 may be later than the configuration stop time for the first transmission window of the two transmission windows 221, and the ACU may handle each of the two transmission windows as previously described in the first example. For example, the ACU may send, at about the configuration start time for the first transmission window of the two transmission windows 221, control signals 223 to cause the antenna to activate one or more elements associated with a transmit beam corresponding to the first transmission window of the two transmission windows 221, and send, at about the configuration end time for the first transmission window of the two transmission windows 221, control signals 224 to cause the antenna to deactivate one or more elements associated with the transmit beam corresponding to the first transmission window of the two transmission windows 221. The ACU may then send, at about the configuration start time for the second transmission window of the two transmission windows 221, control signals 225 to cause the antenna to activate one or more elements associated with a transmit beam corresponding to the second transmission window of the two transmission windows. The transmit beam corresponding to the second transmission window of the two transmission windows 221 may either be same or different than the transmit beam corresponding to the first transmission window of the two transmission windows 221, and wherein the elements activated in the transmit beam corresponding to the second transmission window of the two transmission windows 221 may be same or different (e.g., in a number of elements and/or the elements themselves) from the elements activated in the transmit beam corresponding to the first transmission window of the two transmission windows 221 (e.g., where the same transmit beam corresponds to both transmission windows). The ACU may send, at about the configuration stop time for the second transmission window of the two transmission windows 221, control signals 226 to cause the antenna to deactivate one or more elements associated with the transmit beam corresponding to the second transmission window of the two transmission windows 221.

A modem may receive (e.g., in the forward channel signal) activity records 230. The activity records 230 may comprise information corresponding to a multiplicity of transmission windows 231, wherein a time duration between the end time of a transmission window of the multiplicity of transmission windows 231 and the start time of the subsequent transmission window of the multiplicity of transmission windows 231 may be shorter than a minimum time that may be required between consecutive configuration changes of the antenna or of a transmit beam corresponding to the multiplicity of transmission windows 231. Responsive to receiving the activity records 230, the modem may send 232 any of the activity records 230 or one or more transmission notifications corresponding to the activity records 230. The ACU may receive 232 the activity records 230 or the corresponding one or more transmission notifications. The ACU may determine, based on the activity records 230 or the corresponding one or more transmission notifications, a configuration start time that may precede a start time associated with an earliest transmission window of the multiplicity of transmission windows 231, and a configuration stop time that may be later than the stop time associated with a latest transmission window of the multiplicity of transmission windows 231. The ACU may send control signals 233 to the antenna at about the configuration start time to cause the antenna to activate one or more elements associated with a transmit beam corresponding to the multiplicity of transmission windows 231, and the ACU may send, at about the configuration end time, control signals 236 to cause the antenna to deactivate one or more elements associated with the transmit beam corresponding to the multiplicity of transmission windows 231.

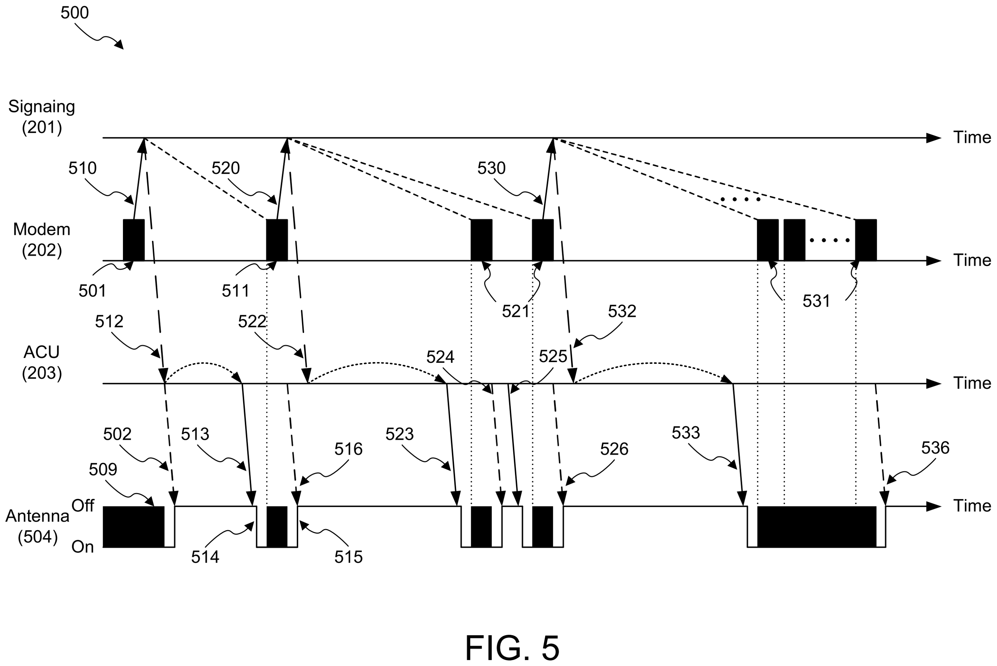

Fig. 5 shows an example timing diagram that may correspond to a terminal. Specifically, Fig. 5 shows an example timing diagram 500 that may correspond to terminal 300. The timing diagram 500 includes the signaling timeline 201, the modem timeline 202 and the ACU timeline 203, as previously described with reference to Fig, 2. The diagram 500 includes an antenna timeline 504 that may correspond to the antenna of the terminal 300 or to a receive beam associated with the antenna.

An antenna may be initially controlled to activate 509 one or more elements associated with a receive beam corresponding to the forward channel signal, for at least the purpose of allowing the modem to receive, during a reception window 501, a forward activity record 510. The forward activity record 510 may comprise information corresponding to a reception window 511 that may be due to begin after receiving the forward activity record 510. Responsive to receiving the forward activity record 510, the modem may send 512 any of the forward activity record 510 or a reception notification corresponding to the forward activity record 510 to the ACU. The ACU may receive 512 the forward activity record 510 or the corresponding reception notification. The ACU may determine, based on the forward activity record 510 or the corresponding reception notification, a configuration start time. The configuration start time may precede a start time associated with the reception window 511. If the configuration start time is later than a current time (e.g., corresponding to the receiving 512 of the forward activity record 510 or the corresponding reception notification) by more than a minimum time that may be required between consecutive configuration changes of the antenna or of a receive beam corresponding to the forward channel signal, the ACU may send control signals 502 to the antenna to cause the antenna to deactivate one or more elements associated with the receive beam. The ACU may send control signals 513 to the antenna at about the configuration start time. The antenna, after or in response to receiving the control signals 513, may activate 514 one or more elements associated with a receive beam corresponding to the forward activity record 510. Consequently, the antenna may be properly configured and active at the time the reception window 511 begins. The ACU may further determine, based on the forward activity record 510 or the corresponding reception notification, a configuration stop time. The configuration stop time may be later than an end time associated with the reception window 511, and send control signals 516 to the antenna at about the configuration stop time. The antenna, after or in response to receiving the control signals 516, may deactivate 515 one or more elements associated with a receive beam corresponding to the forward activity record 510.

A modem may receive forward activity records 520 (e.g., in the forward channel signal during the reception window 511). The forward activity records 520 may comprise information corresponding to two reception windows 521, the first reception window of the two reception windows 521 may be due to begin (shortly) after receiving the forward activity records 520, and the second reception window of the two reception windows 521 may be due to begin sometime after the first reception window of the two reception windows 521 may be due to end. Responsive to receiving the activity records 520, the modem may send 522 any of the forward activity records 520 or reception notifications corresponding to the forward activity records 520. The ACU may receive 522 the forward activity records 520 or the corresponding reception notifications. The ACU may determine, based on the forward activity records 520 or the corresponding reception notifications, and corresponding to each of the two reception windows 521, a configuration start time and a configuration stop time. According to the fifth example, the configuration start time for the second reception window of the two reception windows 521 may be later than the configuration stop time for the first reception window of the two reception windows 521, and the ACU may handle each of the two reception windows 521 as previously described in the fourth example. For example, the ACU may send, at about the configuration start time for the first reception window of the two reception windows 521, control signals 523 to cause the antenna to activate one or more elements associated with a receive beam corresponding to the first reception window of the two reception windows 521, and send, at about the configuration end time for the first reception window of the two reception windows 521, control signals 524 to cause the antenna to deactivate one or more elements associated with the receive beam corresponding to the first reception window of the two reception windows 521. The ACU may then send, at about the configuration start time for the second reception window of the two reception windows 521, control signals 525 to cause the antenna to activate one or more elements associated with a receive beam corresponding to the second reception window of the two reception windows 521. The receive beam corresponding to the second reception window of the two reception windows 521 may be either same or different than the receive beam corresponding to the first reception window of the two reception windows 521, and wherein the elements activated for the receive beam corresponding to the second reception window of the two reception windows 521 may be same or different (e.g., in a number of elements and/or the elements themselves) from the elements activated in the receive beam corresponding to the first reception window of the two reception windows 521 (e.g., where the same receive beam corresponds to both reception windows 521). The ACU may then send, at about the configuration stop time for the second reception window of the two reception windows 521, control signals 526 to cause the antenna to deactivate one or more elements associated with the receive beam corresponding to the second reception window of the two reception windows 521.

A modem may receive forward activity records 530 (e.g., in the forward channel signal during any of the reception windows 521). The forward activity records 530 may comprise information corresponding to a multiplicity of reception windows 531. The time duration between the end time of a reception window of the multiplicity of reception windows 531 and the begin time of the subsequent reception window of the multiplicity of reception windows 531 may be shorter than a minimum time that may be required between consecutive configuration changes of the antenna or of a receive beam corresponding to the multiplicity of reception windows 531. Responsive to receiving the activity records 530, the modem may send 532 any of the forward activity records 530 or one or more reception notifications corresponding to the forward activity records 530. The ACU may receive 532 the forward activity records 530 or the one or more corresponding reception notifications. The ACU may determine, based on the forward activity records 530 or the corresponding reception notifications, a configuration start time that may precede the begin time associated with an earliest reception window of the multiplicity of reception windows 531, and a configuration stop time that may be later than an end time associated with a latest reception window of the multiplicity of reception windows 531. The ACU may send control signals 533 to the antenna at about the configuration start time to cause the antenna to activate one or more elements associated with a receive beam corresponding to the multiplicity of reception windows 531, and send, at about the configuration end time, control signals 536 to cause the antenna to deactivate one or more elements associated with the receive beam corresponding to the multiplicity of reception windows 531.

Referring to Fig. 3, the satellite communication terminal 300 may comprise a modem 305, an antenna configured for satellite communication (not shown), and an antenna control unit (ACU) 350. The modem 305 and the ACU 350 may be interconnected using a communication channel 390. The communication channel 390 may comprise an Ethernet local area network (LAN) and communication between the modem 305 and the ACU 350 may be based on the Internet Protocol (IP) stack.

An ACU 350 may comprise a processor 360 and an ACU synchronization module 370. The processor 360 and the ACU synchronization module 370 may be interconnected, for at least the purpose of exchanging timing information 365 between them (as described further herein). The ACU synchronization module 370 may be implemented using a field programmable gate array (FPGA) device. The processor 360 may be a processor module, comprising at least one microprocessor and at least one interface (e.g., a local area network (LAN) interface) coupled to the at least one microprocessor and corresponding to a communication channel 390 (e.g., an Ethernet LAN). The ACU synchronization module 370 and the processor 360 may be implemented using a system-on-chip (SoC) device.

An ACU 350 may further comprise a tracking receiver 380. The tracking receiver 380 may be configured to tune on a signal 385 received from a satellite (e.g., via a receive antenna of the satellite communication terminal 300) and to generate signal level information 387 corresponding to the signal 385 received from the satellite. The processor 360 may be configured to control the tracking receiver 380 (e.g., to cause the tracking receiver 380 to tune on a signal 385), receive from the tracking receiver 380 the signal level information 387 corresponding to the signal 385, and to use the signal level information 387, for example, for optimizing a pointing of the (receive) antenna of the satellite communication terminal 300 at the satellite.

The processor 360 may be configured to send control signals 363 to the antenna, for example to point the antenna at a satellite. The processor 360 may be further configured to receive sensor information 364 from the antenna, and to use the sensor information 364 and/or signal level information 387 (e.g., if tracking receiver 380 is present) for any of monitoring the antenna performance and/or for determining subsequent control signals 363. The antenna may be a mechanically steerable antenna, and the processor 360 may send control signals 363 to control one or more actuators (motors) associated with the antenna (e.g., to control any of an azimuth angle, an elevation angle, and a skew angle of the antenna).

An antenna may be an electronically steerable antenna (ESA), and the processor 360 may send control signals 363 to adjust any of a transmit beam and/or a receive beam of the antenna. The antenna may be configured to simultaneously generate multiple transmit beams and/or multiple receive beams. The transmit beam(s) and the receive beam(s) may be associated with a single aperture. The antenna may have two or more apertures and the transmit beam(s) may be associated with different aperture(s) than the receive beam(s). The adjusting of a transmit beam and/or of a receive beam may comprise adjusting any of a beam's direction, shape, or power (gain), for example by means of activating, deactivating, or modifying electrical parameters (e.g., electrical current) of elements of the antenna (e.g., amplifiers, phase shifters).

An antenna may be an electro-mechanically steerable antenna. For example, the azimuth angle of the antenna may be mechanically modified (e.g., using an actuator) and the elevation angle may be electronically controlled. The processor 360 may be configured to generate control signals 363 accordingly.

A modem 305 may comprise a processor 310, a modem synchronization module 320, and a forward channel receiver 330. The processor 310 and the modem synchronization module 320 may be interconnected, for at least the purpose of exchanging timing information 315 between them (as described further herein). The processor 310 may be interconnected to the forward channel receiver 330, for at least the purpose of receiving network signaling information 335 (as described further herein). The modem synchronization module 320 and the forward channel receiver 330 may be interconnected, for at least the purpose of sending received network clock timestamps 325 from the forward channel receiver 330 to the modem synchronization module 320.

A modem synchronization module 320 may be implemented using a field programmable gate array (FPGA) device. The processor 310 may be a processor module, comprising at least one microprocessor and at least one interface (e.g., a local area network (LAN) interface) coupled to the at least one microprocessor and corresponding to a communication channel 390 (e.g., an Ethernet LAN). The processor 310 and the modem synchronization module 320 may be implemented using a SoC device.

A modem 305 may be connected to the antenna, for at least the purpose of transmitting to a satellite and/or receiving from a satellite via the antenna. A transmit port of the modem (not shown) may be connected to a corresponding port of the antenna. The forward channel receiver 330 may be coupled to a receive port 394 of the modem 305. The receive port 394 may be connected to the antenna via the ACU 350 (e.g., in parallel to the tracking receiver 380).

A forward channel receiver 330 may be configured to receive a signal 394 from a satellite via the antenna (and via the ACU 350). The forward channel receiver 330 may be configured to tune on a forward channel signal (carrier) included in the received signal 394. The forward channel signal may be associated with a satellite communication network. The forward channel signal may be in accordance with the 2nd Generation Digital Video Broadcasting for Satellites (DVB-S2, ETSI EN 302 307-1) waveform, or with the DVB-S2 Extensions (DVB-S2X, ETSI EN 302 307-2) waveform. The forward channel receiver 330 may be configured to extract, from the forward channel signal, timestamps 325 corresponding to a network clock associated with the satellite communication network, and to send the timestamps 325 to the modem synchronization module 320. The timestamps 325 may comprise network clock reference (NCR) timestamps in accordance with a waveform of the forward channel signal. The modem synchronization module 320 may be configured to receive the timestamps 325 and to generate, based on the timestamps 325 and using a clock source (e.g., an oscillator) a modem local clock. The modem local clock may be locked on the network clock (e.g., advancing at a same rate and/or having, at any given time, about a same value as the network clock (as the network clock may be observed at the location of the terminal 300)).

An ACU synchronization module 370 may be configured to generate an ACU local clock. The ACU local clock may be locked on (e.g., synchronized to) the modem local clock of modem 305 (e.g., advancing at about a same rate and/or having, at any given time, about a same value as the modem local clock).

Synchronizing an ACU local clock to a modem local clock may comprise using a clock synchronization protocol over a communication channel 390 interconnecting a modem 305 and an ACU 350. For example. The communication channel 390 may comprise an Ethernet LAN, and communication between the modem 305 and the ACU 350 may be based on the Internet Protocol (IP) stack, synchronizing the ACU local clock to the modem local clock may comprise using the Network Time Protocol (NTP), the Precision Time Protocol (PTP), or any other suitable protocol. The modem 305 may be configured to perform the role of clock master (e.g., based on the modem local clock as the clock source). As the modem local clock may be locked on the network clock, synchronizing the ACU local clock to the modem local clock may result in synchronizing the ACU local clock to the network clock (e.g., as observed at the location of the terminal 300).

An ACU synchronization module 370 may be configured to generate a synchronization signal 392. The synchronization module 370 may be configured to generate a reference clock 391. An ACU 350 may comprise a GNSS receiver 375. The GNSS receiver 375 may be configured to output a GNSS synchronization signal 378 and/or a GNSS reference clock 377. The ACU synchronization module 370 may be configured to receive (e.g., from the GNSS receiver 375) the GNSS synchronization signal 378 and/or the GNSS reference clock 377, and to generate the synchronization signal 392 and possibly the reference clock 391 based on the GNSS synchronization signal 378 and on the GNSS reference clock 377, respectively. In some embodiments (not shown in Fig. 3), the ACU synchronization module 370 may be configured to receive a synchronization signal 392 and/or a reference clock 391.

A modem 305 (e.g., using the modem synchronization module 320) may be configured to receive, for example from the ACU 350 (e.g., from ACU synchronization module 370), a synchronization signal 392. The modem synchronization module 320 may be further configured to receive (e.g., from the ACU synchronization module 370) a reference clock 391. The synchronization signal 392 may be generated using the reference clock 391. In some embodiments (not shown in Fig. 3), the modem synchronization module 320 may be configured to generate the synchronization signal 392 (e.g., based on a clock source associated with the synchronization module 320).

Regardless of whether a synchronization signal 392 is generated by a modem 305 or by an ACU 350, the synchronization signal 392 may be a one-pulse-per-second (1PPS) synchronization signal. A synchronization module 320 may be configured to determine, for at least one pulse of the synchronization signal 392, a value of the modem local clock corresponding to an edge (e.g., a rising edge) of the at least one pulse. The synchronization module 320 may be further configured to determine a first modem local clock value corresponding to a first pulse of the synchronization signal 392, and to determine a second modem local clock value corresponding to a second pulse of the synchronization signal 392. The time difference between the second pulse and the first pulse may correspond to the synchronization signal 392 cycle duration (e.g., 1 second for a 1PPS signal). The synchronization module 320 may be further configured to calculate a cycle duration of the synchronization signal 392 (e.g., in terms of the modem local clock rate), for example by calculating a difference between the second modem local clock value and the first modem local clock value.

The synchronization module 320 may be configured, based upon determining a value of the modem local clock corresponding to an edge (e.g., a rising edge) of a pulse of the synchronization signal 392, to produce an expected value of the modem local clock 315 corresponding to the next pulse of the synchronization signal 392, and to send the expected value of the modem local clock 315 to the processor 310. The producing of the expected value may comprise adding the synchronization signal 392 cycle duration to the modem local clock corresponding to the pulse of the synchronization signal 392.

A processor 310 may be configured to receive an expected value of the modem local clock 315, for example, the expected value of the modem local clock 315 that may be produced by the synchronization module 320. The processor 310 may be configured to receive a signal from the synchronization module 320 and to obtain, from the synchronization module 320, the expected value of the modem local clock 315 produced by the synchronization module 320. The signal may correspond to a pulse of the synchronization signal 392. The processor 310 may be configured, after or in response to the receiving of the signal corresponding to the pulse, to obtain from the synchronization module 320 a value of the modem local clock corresponding to the pulse and a cycle duration value corresponding to the pulse, and calculate the expected value of the modem local clock (315) corresponding to the next pulse of the synchronization signal 392 (e.g., by adding the cycle duration value to the modem local clock value). The processor 310 may be configured (e.g., after or in response to reception and/or calculation of the expected value of the modem local clock 315) to send the expected value of the modem local clock 315 to the ACU 350 via the communication channel 390.

An ACU synchronization module 370 may be configured to generate an ACU local clock. The ACU local clock may be locked on the modem local clock (e.g., advancing at about a same rate and/or having, at any given time, about a same value as the modem local clock). The processor 360 of ACU 350 may be configured to receive (e.g., from the modem 305 and via the communication channel 390) an expected value of the modem local clock corresponding to the next pulse of the synchronization signal 392 and to load 365 the received expected value of the modem local clock to the ACU synchronization module 370. The ACU synchronization module 370 may be configured to generate the ACU local clock, for example, based on the reference clock 391, and to reset the ACU local clock value to the received expected value of the modem local clock in accordance with an edge (e.g., a rising edge) of the synchronization signal 392. Since the modem synchronization module 320 and the ACU synchronization module 370 may share a synchronization signal 392, the modem local clock and the ACU local clock may show about a same value at least at times corresponding to pulses of the synchronization signal 392. If the modem synchronization module 320 and the ACU synchronization module 370 also share a reference clock 391, the modem local clock and the ACU local clock may show about a same value at any given time (e.g., as both local clocks may be generated based on the same reference clock).

If reference clock 391 is not shared between a modem synchronization module 320 and an ACU synchronization module 370, each synchronization module may generate a respective local clock based on a different reference clock. Even if the reference clocks are of a same nominal rate ($f$), the actual rates of the two reference clocks may slightly differ ($\Delta f$). However, if the ACU synchronization module 370 resets the value of the ACU local clock according to the expected value of the modem local clock every 1 second, the maximum time error between the ACU local clock and the modem local clock may be limited to about $\Delta f/f$. For example, if the rate accuracy of both reference clocks is $\pm$25ppm (parts-per-million), the maximum time error between the ACU local clock and the modem local clock may be up to $\pm$50ppm of 1 second (e.g., up to 50 microseconds).

A forward channel receiver 330 of modem 305 may be configured to extract, from a forward channel signal, network signaling information 335. The network signaling information 335 may comprise return channel resource allocation information corresponding to a return channel of the satellite communication network. For example, return channel resource allocation information may comprise one or more allocation records, wherein an allocation record may comprise one or more identifiers corresponding to parameters of a transmission. For example, an allocation record may comprise a terminal identifier, an identifier corresponding to a transmission frequency, an identifier corresponding to a transmission symbol rate (or bandwidth), an identifier corresponding to a transmission start time, and/or an identifier corresponding to a transmission stop time and/or an identifier corresponding to a transmission duration. The identifiers corresponding to the transmission start time and to the transmission stop time may be associated with a network clock as observed at the at least one gateway. An identifier corresponding to a transmission duration may be associated with a rate of the network clock.

Network signaling information 335 may further comprise forward channel information corresponding to at least the forward channel signal. For example, the forward channel information may comprise one or more activity records, wherein an activity record may comprise a terminal identifier, an identifier corresponding to an activity start time, and an identifier corresponding to an activity stop time and/or an identifier corresponding to an activity duration. The identifiers corresponding to an activity start time and to an activity stop time may be associated with the network clock as observed at the at least one gateway. An identifier corresponding to an activity duration may be associated with a rate of the network clock.

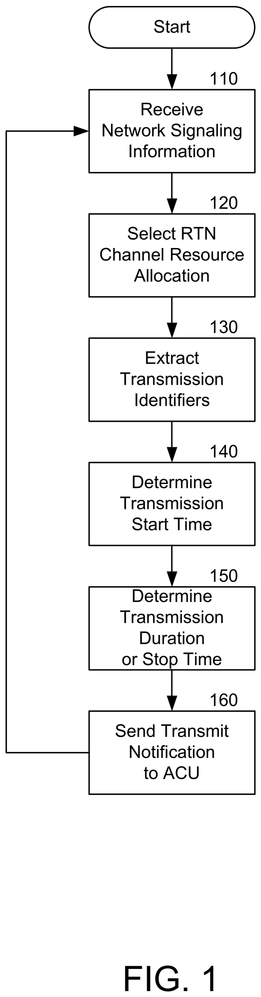

Fig. 1 shows an example flow chart of a terminal sending a periodic notification. Referring to Fig. 1, a processor 310 may be configured to receive, at step 110, from the forward channel receiver 330, network signaling information (e.g., network signaling information 335). The receiving, at step 110, may comprise continuously receiving network signaling information (e.g., if the forward channel receiver 330 may be receiving the forward channel signal). The received network signaling information may comprise return channel resource allocation information. The received network signaling information (not shown in Fig. 1) may further comprise forward channel information. Although Fig. 1 refers to return channel resource allocation information, similar steps may be performed with respect to forward channel information.

A processor 310 may be configured to select, at step 120, from received network signaling information, at least one return channel resource allocation record corresponding to a terminal 300. The selecting, at step 120, may be based on a terminal identifier included in the network signaling information. The processor 310 may be configured to extract, at step 130, from the at least one return channel resource allocation record, an identifier corresponding to a transmission window start time, an identifier corresponding to a transmission window end time and/or an identifier corresponding to a transmission window duration. The identifier corresponding to a transmission window start time and the identifier corresponding to a transmission window end time may be associated with the network clock as it may be observed at the at least one gateway.

However, due to latency associated with the propagation of information over a satellite link (e.g., tens to hundreds of milliseconds, depending among other factors on the satellite orbit altitude), a modem local clock may be running behind a network clock as observed at the at least one gateway (e.g., by a time difference of $T_{fwd}$ ). In other words, if the network clock shows the time $T$, the modem local clock may show the time $T - T_{fwd}$. Furthermore, any transmission sent from the terminal 300 may take approximately $T_{rtn}$ to reach its destination (e.g., at the at least one gateway). Thus, for a transmission sent from the terminal 300 to reach the at least one gateway if the network clock as observed at the gateway shows a time $T$, the modem 305 may be configured to send the transmission when the modem local clock shows $(T - T_{fwd}) - T_{rtn}$, or in another form $T - (T_{fwd} + T_{rtn})$. The sum $T_{fwd} + T_{rtn}$ may be referred to as the round-trip delay (e.g., $T_{rtd} = T_{fwd} + T_{rtn}$).

Any of terminal 300 and at least one satellite may be in motion relative to each other, thus a round-trip delay associated with the terminal 300 may vary in accordance with the relative motion. Let $T_{rtd}(t)$ represent the round-trip delay associated with the terminal 300 corresponding to a network clock time $t$. The modem 305 may be configured to, after or in response to selecting, at step 120, a return channel resource allocation (e.g., a transmission window) corresponding to a network clock time $t$, to transmit when the modem local clock shows a time about $t - T_{rtd}(t)$. A processor 310 may be configured to determine, at step 140, based on an identifier corresponding to a transmission window start time (t) and based on the round-trip delay expected at the transmission window start time ($T_{rtd}(t)$) a transmission start time corresponding to the modem local clock (e.g., $t - T_{rtd}(t)$). The processor 310 may be configured to determine, at step 150, based on the identifier corresponding to a transmission end time (t') and/or based on the identifier corresponding to a transmission duration ($\Delta t$), and based on the round-trip delay expected at the transmission window end time (e.g., $T_{rtd}(t')$ or $T_{rtd}(t + \Delta t)$), a transmission stop time corresponding to the modem local clock (e.g., $t' - T_{rtd}(t')$ or $t' - T_{rtd}(t + \Delta t)$), or a transmission duration ($\Delta t$) associated with the rate of the modem local clock. The processor 310 may be configured to generate a transmission notification containing the determined, at step 140, transmission start time, the determined transmission stop time 150 and/or the transmission duration, and to send, at step 160, the transmission notification to the ACU 350.

A processor 310 may be configured to forward network signaling information 335, a terminal identifier, and/or information corresponding to a round-trip delay, to an ACU 350 (e.g., processor 360) over a communication channel 390.

The, processor 360 of, ACU 350 may be configured to perform steps 110 to 150, based on the terminal identifier and the information corresponding to the round-trip delay, and to generate the transmission notification in a similar manner, with the slight difference that the determining 140 of the transmission start time and the determining 150 of the transmission stop time may be in correspondence to the ACU local clock.

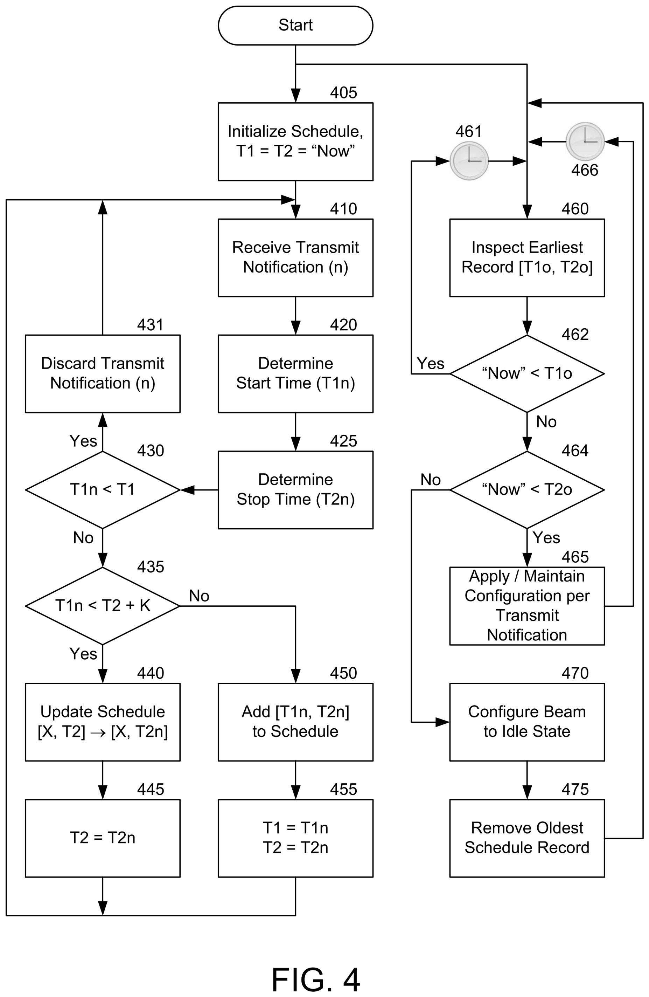

Fig. 4 shows an example flow chart of a terminal performing two processes about simultaneously. Referring to Fig. 4, processor 360 (of ACU 350) may be configured to engage in two processes about simultaneously: a scheduling process (e.g., steps 405 to 455) and an implementation process (e.g., steps 460 to 475). While Fig. 4 may represent processes associated with one or more transmit beams, similar processes may be associated with one or more receive beams. Processor 360 may be configured to engage in a scheduling process about simultaneously for one or more transmit beams, a scheduling process for one or more receive beams, an implementation process for the one or more transmit beams, and an implementation process for the one or more receive beams. The processor 360 may be configured to engage in a scheduling process about simultaneously for one or more transmit beams and for one or more receive beams, and in an implementation process for the one or more transmit beams and the one or more receive beams.

Processor 360 may be configured (e.g., at about a time of initiating communication with the modem 305) to initialize, at step 405, a latest start time identifier (T1) and a latest stop time identifier (T2), for example, to a time value corresponding to a present time and/or corresponding to the ACU local clock. The processor 360 may be configured to receive, at step 410, (e.g., from the modem 305) or to generate (e.g., based at least on received network signaling information and on received round-trip delay information corresponding to the terminal 300), a transmission notification (n). The transmission notification may comprise a transmission start time, and a transmission stop time. In either case (e.g., the transmission notification (n) may be received from the modem 305 or generated by the processor 360 of the ACU 350), the transmission start time and/or the transmission stop time may correspond to the ACU local clock. Even if transmission notification (n) is received from the modem 305 and the transmission start time and/or the transmit stop time may correspond to the modem 305 local clock, the transmit start time and/or the transmit stop time may about correspond also to the ACU local clock of ACU 350 (e.g., as the ACU local clock of the ACU 350 may be locked on the modem local clock of the modem 305, as described herein). The transmission notification (n) may be received (or generated) some time before the modem 305 may be due to begin transmitting.

A processor 360 may be configured, upon receiving, at step 410, (or generating) a transmission notification (n), to determine, at step 420 a configuration start time (T1n) corresponding to the transmission start time included in the transmission notification. The determining, at step 420, of the configuration start time (T1n) may comprise considering, in addition to the transmission start time, a maximum response time and a guard time. The maximum response time may correspond to a duration that may be required for preparing the antenna (or any beam associated with the antenna) for transmitting according to the transmission notification. The guard time may correspond, at least in part, to a maximum difference between the ACU local clock of the ACU 350 and the modem local clock of the modem 305. In some embodiments. The ACU local clock may be synchronized on the modem local clock using a clock synchronization protocol, a difference between the ACU local clock and the modem local clock may correspond to performance limitations of the clock synchronization protocol used. In some embodiments. The ACU local clock may be synchronized on the modem local clock using a synchronization signal (e.g., synchronization signal 392), a difference between the ACU local clock and the modem local clock may result from not sharing a reference clock (e.g., like reference clock 391). The determining, at step 420, of the configuration start time (T1n) may comprise calculating the configuration start time (T1n) according to the formula:

$$T1n = Transmission\ Start\ Time - (Response\ Time + Guard)$$

Processor 360 may be further configured to determine, at step 425, a configuration stop time (T2n) corresponding to a transmission stop time included in a transmission notification (n). The determining, at step 425, of the configuration stop time (T2n) may comprise considering, in addition to the transmission stop time, a guard time. The determining, at step 425, of the configuration stop time (T2n) may comprise calculating the configuration stop time (T2n) according to the formula:

$$T2n = Transmission\ Stop\ Time + Guard$$

Processor 360 may be configured to receive (or generate) transmission notifications, either for a specific beam or for the entire antenna, in a chronological order. The processor 360 may be configured to compare, at step 430, the configuration start time (T1n) to the latest start time identifier (T1). The processor 360 may be configured, after or in response to determining that the configuration start time (T1n) is smaller (earlier) than the latest start time identifier (T1), to discard, at step 431, the transmission notification (n) and to resume receiving, at step 410, (or generating) subsequent transmission notifications. The processor 360 may be configured, after or in response to determining that the configuration start time (T1n) is same or greater (later) than the latest start time identifier (T1), to compare, at step 435, the configuration start time (T1n) to the latest stop time identifier (T2) plus an antenna guard (K). The antenna guard may be set to a non-zero value, for example, to compensate for latencies and guard intervals that may be associated with the antenna, or with applying any configuration to the antenna. The processor 360 may be configured, after or in response to determining that the configuration start time (T1n) is smaller (earlier) than the latest stop time identifier (T2) plus the antenna guard (K), to update, at step 440, a latest configuration record included in the schedule in accordance with the configuration stop time (T2n). For example, if the latest configuration record comprises a record start time *X* and a record stop time of *T2*, the update, at step 440, may comprise replacing the record stop time *T2* with the configuration stop time (T2n). The processor 360 may be further configured, after or in response to the update, at step 440, of a latest configuration record, to update, at step 445, the latest stop time identifier (T2) in accordance with the configuration stop time (T2n). The processor 360 may be configured, after or in response to determining that the configuration start time (T1n) is same or greater (later) than the latest stop time identifier (T2) plus the antenna guard (K), to add, at step 450, a new configuration record (e.g., that may become the latest configuration record) to the schedule. The record start time may correspond to the configuration start time (T1n) and the record stop time may correspond to the configuration stop time (T2n). The processor 360 may be further configured, after or in response to the adding, at step 450, of the new configuration record, to update, at step 455, the latest start time identifier (T1) and the latest stop time identifier (T2) in accordance with the configuration start time (T1n) and the configuration stop time (T2n), respectively. The processor 360 may be configured, after or in response to any of the update, at step 445, and the update, at step 455, of the latest start time identifier (T1) and/or the latest stop time identifier (T2), to resume receiving, at step 410, (or generating) subsequent transmission notifications.

A processor 360 may be configured, at about simultaneously with a scheduling process (405 to 455), to perform the implementation process (460 to 475). The processor 360 may be configured to inspect, at step 460, the schedule for an earliest configuration record included in the schedule. The earliest configuration record may comprise a record start time (T1o) and a record stop time (T2o). Any other configuration record included in the schedule may be associated with a record start time larger (later) than a record start time (T1o) associated with the earliest configuration record. The processor 360 may be configured to compare, at step 462, a current time (e.g., "Now" corresponding to the ACU local clock) with the record start time associated with the earliest configuration record (T1o). The processor 360 may be configured, after or in response to determining that the current time is smaller (earlier) than the record start time (T1o), to suspend, at step 461, the implementation process for a first predefined duration (e.g., thus allowing the current time to advance), and then resume the inspecting, at step 460, of the schedule for an earliest configuration record. The processor 360 may be configured, after or in response to determining that the current time is same or greater (later) than the record start time associated with the earliest configuration record (T1o), to compare, at step 464, the current time to the record stop time associated with the earliest configuration record (T2o). The processor 360 may be configured, after or in response to determining that the current time is smaller (earlier) than the record stop time (T2o), to configure, at step 465, the antenna (or a beam associated with the antenna) or to maintain the antenna (or a beam associated with the antenna) configured in accordance with a corresponding transmission notification, and to suspend, at step 466, the implementation process for a second predefined duration (e.g., thus allowing the current time to advance), and then resume the inspecting, at step 460, of the schedule for an earliest configuration record. The processor 360 may be configured, after or in response to the suspending, at step 466, of the implementation process for a second predefined duration, to resume the comparing, at step 464, of the (advanced) current time with the record stop time associated with the earliest configuration record (T2o). The processor 360 may be configured, after or in response to determining that the current time is same or greater (later) than the record stop time (T2o), to configure, at step 470, the antenna (or a beam associated with the antenna) to an idle state, to remove, at step 475, the earliest configuration record from the schedule, and to resume the inspecting, at step 460, of the schedule (e.g., for an earliest configuration record included in the schedule). The configuring the antenna (or a beam associated with the antenna) to an idle state, at step 470, may comprise sending control signals 363 to the antenna to cause a reduction in electric power consumption associated with the antenna (or with a beam associated with the antenna). Causing a reduction in electric power consumption may comprise any of reducing a number of powered active elements corresponding to the antenna (or to a beam associated with the antenna), and powering off all the active elements associated with the antenna (or with a beam associated with the antenna).

Hereinafter, various characteristics will be highlighted in a set of numbered clauses or paragraphs. These characteristics are not to be interpreted as being limiting on the invention or inventive concept, but are provided merely as a highlighting of some characteristics as described herein, without suggesting a particular order of importance or relevancy of such characteristics.

Clause 1. A method, comprising receiving, at a modem of a satellite communication terminal, a forward channel signal associated with a network.

Clause 2. The method of clause 1, further comprising extracting, from the forward channel signal, timestamps associated with a clock of the network.

Clause 3. The method of any one of clauses 1-2, further comprising synchronizing, using the timestamps, a local clock of the modem to the network clock.

Clause 4. The method of any one of clauses 1-3, further comprising determining, a round-trip delay associated at least with the satellite communication terminal and with a satellite.

Clause 5. The method of any one of clauses 1-4, further comprising extracting, from the forward channel signal, signaling information associated with a return channel of the network.

Clause 6. The method of any one of clauses 1-5, further comprising sending, to an antenna control unit (ACU) of the satellite communication terminal, a terminal identifier, at least part of the signaling information, and the round-trip delay.

Clause 7. The method of any one of clauses 1-6, wherein the signaling information further comprises information associated with the forward channel signal.

Clause 8. The method of any one of clauses 1-3 and 5, further comprising determining, based on the return channel signaling, a return resource allocation associated with the terminal, wherein the return resource allocation comprises a transmit start time identifier associated with the network clock.

Clause 9. The method of any one of clauses 1-3, 5, and 8, further comprising sending, to an antenna control unit (ACU) of the terminal, a transmit notification comprising a transmit start time identifier associated with the modem local clock.

Clause 10. The method of any one of clauses 1-3, 5, and 8-9, wherein the return resource allocation further comprises a transmit end time identifier associated with the network clock, or a transmit time duration identifier; and the transmit notification further comprises a transmit stop time identifier associated with the modem local clock, or a time duration identifier corresponding to the transmit time duration identifier.

Clause 11. The method of any one of clauses 1-3, 5, and 8-10, further comprising determining, a round-trip delay associated at least with the satellite communication terminal and with a satellite, and calculating, based on the transmit start time identifier of the return resource allocation and the round-trip delay, at least the transmit start time identifier of the transmission notification.

Clause 12. The method of any one of clauses any one of clauses 1-3, 5, and 8-11, wherein the signaling information further comprises information associated with the forward channel signal, and the method further comprising determining, at the modem and based on the information associated with the forward channel signal, at least one record associated with the terminal, wherein the record comprises at least a receive start time identifier associated with the network clock, and sending, by the modem and to the ACU, a receive notification comprising a receive start time identifier associated with the modem local clock.

Clause 13. A method, comprising synchronizing, at an antenna control unit (ACU) of a satellite communication terminal, a local clock of the ACU to a local clock of a modem of the satellite communication terminal.

Clause 14. The method of clause 13, further comprising receiving, at the ACU and from the modem, a transmit notification, wherein the transmit notification comprises a transmit start time identifier associated with the modem local clock, and a transmit stop identifier associated with the modem local clock, or a time duration identifier.

Clause 15. The method of any one of clauses 13-14, further comprising determining, based on the transmit start time identifier, a first time $(T1n)$ associated with the ACU local clock.

Clause 16. The method of any one of clauses 13-15, further comprising determining, based on the transmit stop time or the time duration identifier, a second time $(T2n)$ associated with the ACU local clock, wherein the second time surpasses the first time.

Clause 17. The method of any one of clauses 13-16, wherein the ACU controls an antenna of the satellite communication terminal, and the method further comprising determining, at the ACU and based on a latest stop time $(T2)$, that a difference between the first time $(T1n)$ and the latest stop time $(T2)$ is shorter than a predefined guard $(K)$ associated with the antenna, and responsive to the determining, updating, at the ACU, any of a latest schedule record and the latest stop time $(T2)$ in accordance with the second time $(T2n)$.

Clause 18. The method of any one of clauses 13-17, further comprising determining, based on a latest stop time $(T2)$, that the difference between the first time $(T1n)$ and the latest stop time $(T2)$ is equal to or longer than the predefined guard $(K)$, and responsive to the determining, adding, a latest schedule record comprising the first time and the second time $(T1n, T2n)$ to the schedule, and updating the latest start time $(T1)$ and the latest stop time $(T2)$ in accordance with the first time $(T1n)$ and the second time $(T2n)$, respectively.

Clause 19. The method of any one of clauses 13-18, further comprising inspecting, an earliest schedule record associated with a schedule, the earliest schedule record comprising a start time $(T1o)$ associated with the ACU local clock, and a stop time $(T2o)$ associated with the ACU local clock, determining that a current time is between the start time $(T1o)$ and the stop time $(T2o)$, and in response to the determining, configuring, or maintaining the configuration of, at least a transmit beam of an antenna coupled to the ACU in accordance with a transmit notification corresponding to the stop time $(T2o)$.

Clause 20. The method of any one of clauses 13-19, further comprising determining, based on the inspecting, that the current time surpasses the stop time $(T2o)$, and responsive to the determining, configuring at least the transmit beam of the antenna in accordance with an idle state of the antenna, and removing the earliest schedule record from the schedule.

Clause 21. The method of any one of clauses 13-20, further comprising receiving a receive notification comprising a receive start time identifier associated with the modem local clock, determining, based on the receive start time identifier, a time associated with the ACU local clock for configuring in accordance with the receive notification at least a receive beam associated with the antenna, and in response to arrival of the determined time, configuring, from the ACU to the antenna, at least a receive beam in accordance with the receive notification.

Clause 22. A computing device comprising: one or more processors; and memory storing instructions that, when executed by the one or more processors, cause the computing device to perform the method of any one of clauses 1-21.

Clause 23. A system comprising a terminal configured to perform any one of the clauses 1-21 and a satellite configured to transmit a signal.

Clause 24. A computer-readable medium storing instructions that, when executed, cause performance of any one of clauses 1-21.

Clause 25. A system, comprising a modem; an antenna for satellite communication, coupled to the modem; and an antenna control unit (ACU), coupled to the antenna and to the modem, wherein the coupling of the ACU to the modem comprises a communication channel configured for exchanging messages between the modem and the ACU in accordance with a predefined protocol, and wherein the modem is configured to receive a forward channel signal associated with a network; extract, from the forward channel signal, timestamps associated with a clock of the network; synchronize, using the timestamps, a local clock of the modem to the network clock; and distribute the local clock of the modem over the communication channel in accordance with a time protocol or a clock synchronization protocol.

Clause 26. The system of clause 25, wherein the communication channel comprises an Ethernet local area network (LAN), and the protocol is based on the Internet Protocol (IP).

Clause 27. The system of any one of clauses 25-26, wherein the time protocol or the clock synchronization protocol includes any of the Network Time Protocol (NTP) or the Precision Time Protocol (PTP), respectively.

Clause 28. The system of any one of clauses 25-27, wherein the ACU is configured to: receive, from the modem and over the communication channel, time information or clock synchronization information in accordance with the time protocol or the clock synchronization protocol, respectively; and synchronize, using the time information or the clock synchronization information, a local clock of the ACU to the local clock of the modem.

Clause 29. The system of any one of clauses 25-28, wherein the forward channel signal is in accordance with the 2nd Generation Digital Video Broadcasting for Satellites (DVB-S2, EN 302 307-1) or to the DVB-S2 Extensions (DVB-S2X, EN 302 307-2) waveforms.

Clause 30. A system, comprising a modem; an antenna for satellite communication, coupled to the modem; and an antenna control unit (ACU), coupled to the antenna and to the modem, wherein the coupling of the ACU to the modem comprises: a communication channel, configured for exchanging messages between the modem and the ACU in accordance with a predefined protocol, and a synchronization signal.

Clause 31. The system of clause 30, wherein the synchronization signal is a one-pulse-per-second (1PPS) synchronization signal, and wherein coupling of the ACU to the modem comprises providing the 1PPS synchronization signal from the ACU to the modem.

Clause 32. The system of any one of clauses 30-31, wherein the synchronization signal is a one-pulse-per-second (1PPS) synchronization signal, and wherein coupling of the ACU to the modem comprises providing the 1PPS synchronization signal from the modem to the ACU.

Clause 33. The system of clause 31, wherein the modem comprises a forward channel receiver, and the modem is configured to extract, from a forward channel received using the forward channel receiver, timestamps corresponding to a network clock reference (NCR); generate, based on the timestamps, a local clock locked on the network clock; determine, for at least one pulse of the 1PPS synchronization signal, a value corresponding to an expected value of a modem local clock at the time of a next pulse of the 1PPS synchronization signal; and send, to the ACU over the communication channel, the determined value of the modem local clock.

Clause 34. The system of clause 33, wherein the ACU is configured to generate a local clock having a frequency of about a nominal frequency of the network clock; receive, via the communication channel, an expected value of the modem local clock; and set, at the time of an immediate 1PPS synchronization signal pulse, the ACU local clock to the expected value of the modem local clock.

Clause 35. The system of clause 33, wherein the forward channel receiver is configured to receive a forward channel in accordance with the 2nd Generation Digital Video Broadcasting for Satellites (DVB-S2, EN 302 307-1) or to the DVB-S2 Extensions (DVB-S2X, EN 302 307-2) waveforms.

Clause 36. The system of clause 31, wherein the ACU comprises a Global Navigation Satellite System (GNSS) receiver configured to output a reference clock and a one-pulse-per-second (1PPS) synchronization signal; the ACU is configured to generate its local clock based on the reference clock; and coupling of the ACU to the modem comprises providing the reference clock and the 1PPS synchronization signal from the ACU to the modem.

Clause 37. The system of clause 36, wherein the modem is configured to receive an external reference clock and to generate its local clock using the received reference clock.

Clause 38. The system of any one of clauses 30-37, wherein the communication channel is an Ethernet local area network link, and the protocol is based on the Internet Protocol (IP).

Various aspects of the disclosure may be embodied as one or more methods, systems, apparatuses (e.g., components of a satellite communication network), and/or computer program products. Accordingly, those aspects may take the form of an entirely hardware embodiment, an entirely software embodiment, an entirely firmware embodiment, or an embodiment combining firmware, software, and/or hardware aspects. Furthermore, such aspects may take the form of a computer program product stored by one or more computer-readable storage media having computer-readable program code, or instructions, embodied in or on the storage media. Any suitable computer readable storage media may be utilized, including hard disks, CD-ROMs, optical storage devices, magnetic storage devices, and/or any combination thereof. In some embodiments, one or more computer readable media storing instructions may be used. The instructions, when executed, may cause one or more apparatuses to perform one or more acts described herein. The one or more computer readable media may comprise transitory and/or non-transitory media. In addition, various signals representing data or events as described herein may be transferred between a source and a destination in the form of electromagnetic waves traveling through signal-conducting media such as metal wires, optical fibers, and/or wireless transmission media (e.g., air and/or space).

Modifications may be made to the various embodiments described herein by those skilled in the art. For example, each of the elements of the aforementioned embodiments may be utilized alone or in combination or sub-combination with elements of the other embodiments. It will also be appreciated and understood that modifications may be made without departing from the true spirit and scope of the present disclosure. The description is thus to be regarded as illustrative instead of restrictive on the present disclosure.

**Claims**

1.  A method, comprising:

    receiving, at a modem of a satellite communication terminal, a forward channel signal associated with a network;
    extracting, from the forward channel signal, timestamps associated with a clock of the network;
    synchronizing, using the timestamps, a local clock of the modem to the network clock;
    extracting, from the forward channel signal, signaling information associated with a return channel of the network;
    determining, based on the return channel signaling, a return resource allocation associated with the terminal, wherein the return resource allocation comprises a transmit start time identifier associated with the network clock; and
    sending, to an antenna control unit (ACU) of the terminal, a transmit notification comprising a transmit start time identifier associated with the modem local clock.

2.  The method of claim 1, wherein:

    the return resource allocation further comprises a transmit end time identifier associated with the network clock, or a transmit time duration identifier; and
    the transmit notification further comprises a transmit stop time identifier associated with the modem local clock, or a time duration identifier corresponding to the transmit time duration identifier.

3.  The method of any one of claims 1-2, further comprising:

    determining, a round-trip delay associated at least with the satellite communication terminal and with a satellite; and
    calculating, based on the transmit start time identifier of the return resource allocation and the round-trip delay, at least the transmit start time identifier of the transmission notification.

4.  The method of any one of claims 1-3, wherein the signaling information further comprises information associated with the forward channel signal; the method further comprising:

    determining, at the modem and based on the information associated with the forward channel signal, at least one record associated with the terminal, wherein the record comprises at least a receive start time identifier associated with the network clock; and
    sending, by the modem and to the ACU, a receive notification comprising a receive start time identifier associated with the modem local clock.

5. A method, comprising:

synchronizing, at an antenna control unit (ACU) of a satellite communication terminal, a local clock of the ACU to a local clock of a modem of the satellite communication terminal;
receiving, at the ACU and from the modem, a transmit notification, wherein the transmit notification comprises:

a transmit start time identifier associated with the modem local clock, and
a transmit stop identifier associated with the modem local clock, or a time duration identifier;

determining, based on the transmit start time identifier, a first time (T1n) associated with the ACU local clock; and
determining, based on the transmit stop time or the time duration identifier, a second time (T2n) associated with the ACU local clock, wherein the second time surpasses the first time.

6. The method of claim 5, wherein the ACU controls an antenna of the satellite communication terminal; the method further comprising:

determining, at the ACU and based on a latest stop time (T2), that a difference between the first time (T1n) and the latest stop time (T2) is shorter than a predefined guard (K) associated with the antenna; and
responsive to the determining, updating, at the ACU, any of a latest schedule record and the latest stop time (T2) in accordance with the second time (T2n).

7. The method of claim 6, further comprising:
determining, based on a latest stop time (T2), that the difference between the first time (T1n) and the latest stop time (T2) is equal to or longer than the predefined guard (K); and responsive to the determining:

adding, a latest schedule record comprising the first time and the second time (T1n, T2n) to the schedule, and
updating the latest start time (T1) and the latest stop time (T2) in accordance with the first time (T1n) and the second time (T2n), respectively.

8. The method of any one of claims 5-7, further comprising:

inspecting, an earliest schedule record associated with a schedule, the earliest schedule record comprising a start time (T1o) associated with the ACU local clock, and a stop time (T2o) associated with the ACU local clock;
determining that a current time is between the start time (T1o) and the stop time (T2o); and
in response to the determining, configuring, or maintaining the configuration of, at least a transmit beam of an antenna coupled to the ACU in accordance with a transmit notification corresponding to the stop time (T2o).

9. The method of claim 8, further comprising:

determining, based on the inspecting, that the current time surpasses the stop time (T2o); and
responsive to the determining:

configuring at least the transmit beam of the antenna in accordance with an idle state of the antenna, and
removing the earliest schedule record from the schedule.

10. The method of any one of claims 6-9, further comprising:

receiving a receive notification comprising a receive start time identifier associated with the modem local clock;
determining, based on the receive start time identifier, a time associated with the ACU local clock for configuring in accordance with the receive notification at least a receive beam associated with the antenna; and
in response to arrival of the determined time, configuring, from the ACU to the antenna, at least a receive beam in accordance with the receive notification.

11. A system, comprising:

a modem;
an antenna for satellite communication, coupled to the modem; and
an antenna control unit (ACU), coupled to the antenna and to the modem, wherein the coupling of the ACU to the modem comprises a communication channel configured for exchanging messages between the modem and the ACU in accordance with a predefined protocol, and wherein the modem is configured to:

receive a forward channel signal associated with a network;
extract, from the forward channel signal, timestamps associated with a clock of the network;
synchronize, using the timestamps, a local clock of the modem to the network clock; and
distribute the local clock of the modem over the communication channel in accordance with a time protocol or a clock synchronization protocol.

12. The system of claim 11, wherein the communication channel comprises an Ethernet local area network (LAN), and the protocol is based on the Internet Protocol (IP); and wherein the time protocol or the clock synchronization protocol includes any of the Network Time Protocol (NTP) or the Precision Time Protocol (PTP), respectively.

13. The system of any one of claims 11-12, wherein the ACU is configured to:

receive, from the modem and over the communication channel, time information or clock synchronization information in accordance with the time protocol or the clock synchronization protocol, respectively; and synchronize, using the time information or the clock synchronization information, a local clock of the ACU to the local clock of the modem.

14. The system of any one of claims 11-13, wherein the forward channel signal is in accordance with the 2nd Generation Digital Video Broadcasting for Satellites (DVB-S2, EN 302 307-1) or to the DVB-S2 Extensions (DVB-S2X, EN 302 307-2) waveforms.

```
          ┌─────────────┐
          │    Start    │
          └─────────────┘
                 │
                 ▼           110
          ┌─────────────┐
          │   Receive   │
          │Network Signaling│
          │ Information │
          └─────────────┘
                 │
                 ▼           120
          ┌─────────────┐
          │ Select RTN  │
          │Channel Resource│
          │ Allocation  │
          └─────────────┘
                 │
                 ▼           130
          ┌─────────────┐
          │   Extract   │
          │Transmission │
          │ Identifiers │
          └─────────────┘
                 │
                 ▼           140
          ┌─────────────┐
          │  Determine  │
          │Transmission │
          │ Start Time  │
          └─────────────┘
                 │
                 ▼           150
          ┌─────────────┐
          │  Determine  │
          │Transmission │
          │  Duration   │
          │ or Stop Time│
          └─────────────┘
                 │
                 ▼           160
          ┌─────────────┐
          │Send Transmit│
          │Notification │
          │   to ACU    │
          └─────────────┘
```

# FIG. 1

FIG. 2

FIG. 3

Start

405
Initialize Schedule,
T1 = T2 = "Now"

410
Receive Transmit
Notification (n)

420
Determine
Start Time (T1n)

425
Determine
Stop Time (T2n)

430
T1n < T1
Yes

431
Discard Transmit
Notification (n)

No

435
T1n < T2 + K
No

Yes

440
Update Schedule
[X, T2] → [X, T2n]

445
T2 = T2n

450
Add [T1n, T2n]
to Schedule

455
T1 = T1n
T2 = T2n

461

466

460
Inspect Earliest
Record [T1o, T2o]

462
"Now" < T1o
Yes

No

464
"Now" < T2o
No

Yes

465
Apply / Maintain
Configuration per
Transmit
Notification

470
Configure Beam
to Idle State

475
Remove Oldest
Schedule Record

FIG. 4

FIG. 5

Europäisches
Patentamt

European
Patent Office

Office européen
des brevets

# EUROPEAN SEARCH REPORT

**Application Number**

EP 26 15 3817

## DOCUMENTS CONSIDERED TO BE RELEVANT

| Category | Citation of document with indication, where appropriate, of relevant passages | Relevant to claim |
|---|---|---|
| Y | US 2022/407589 A1 (DELARUELLE DANIEL [BE] ET AL) 22 December 2022 (2022-12-22) * paragraphs [0023] - [0078] * ----- | 1-14 |
| Y | EP 2 314 111 B1 (GILAT SATELLITE NETWORKS LTD [IL]) 3 July 2013 (2013-07-03) * paragraphs [0108] - [0116]; figures 1,2 * ----- | 1-14 |
| A | WO 2018/092132 A1 (SATIXFY ISRAEL LTD [IL]) 24 May 2018 (2018-05-24) * pages 40-51 * ----- | 1-14 |

**CLASSIFICATION OF THE APPLICATION (IPC)**

INV.
H04B7/185
H04W56/00

**TECHNICAL FIELDS SEARCHED (IPC)**

H04B
H04W

The present search report has been drawn up for all claims

| Place of search | Date of completion of the search | Examiner |
|---|---|---|
| The Hague | 21 May 2026 | Esbri, Oriol |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons
..........................................................................................
& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 26 15 3817

This annex lists the patent family members relating to the patent documents cited in the above-mentioned European search report.
The members are as contained in the European Patent Office EDP file on
The European Patent Office is in no way liable for these particulars which are merely given for the purpose of information.

21-05-2026

| Patent document cited in search report | Publication date | Patent family member(s) | Publication date |
|---|---|---|---|
| US 2022407589 A1 | 22-12-2022 | US 2022407589 A1<br>US 20260005753 A1 | 22-12-2022<br>01-01-2026 |
| EP 2314111 B1 | 03-07-2013 | EP 2314111 A2<br>EP 2590455 A1<br>EP 2632212 A2<br>US 2010034136 A1<br>US 2014321309 A1<br>WO 2010018445 A2 | 27-04-2011<br>08-05-2013<br>28-08-2013<br>11-02-2010<br>30-10-2014<br>18-02-2010 |
| WO 2018092132 A1 | 24-05-2018 | CN 110121845 A<br>EP 3542469 A1<br>IL 266379 A<br>WO 2018092132 A1 | 13-08-2019<br>25-09-2019<br>30-06-2019<br>24-05-2018 |

EPO FORM P0459

For more details about this annex : see Official Journal of the European Patent Office, No. 12/82

**EP 4 783 485 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63749057